(19) Europäisches Patentamt / European Patent Office / Office européen des brevets

(11) **EP 4 237 303 B1**

(12) **FASCICULE DE BREVET EUROPEEN**

(45) Date de publication et mention de la délivrance du brevet:
**12.06.2024 Bulletin 2024/24**

(21) Numéro de dépôt: **21791432.4**

(22) Date de dépôt: **21.09.2021**

(51) Classification Internationale des Brevets (IPC):
**B60W 30/18** *(2012.01)*     **B60W 60/00** *(2020.01)*

(52) Classification Coopérative des Brevets (CPC):
**B60W 30/18163; B60W 60/0011;** B60W 2554/4041; B60W 2554/4042; B60W 2554/802; B60W 2554/804

(86) Numéro de dépôt international:
**PCT/FR2021/051609**

(87) Numéro de publication internationale:
**WO 2022/090640 (05.05.2022 Gazette 2022/18)**

(54) **PROCÉDÉ ET DISPOSITIF DE DÉTERMINATION D'UN POURCENTAGE DE FAISABILITÉ DE CHANGEMENT DE VOIE POUR UN VÉHICULE AUTONOME**

VERFAHREN UND VORRICHTUNG ZUR BESTIMMUNG EINES DURCHFÜHRBARKEITSPROZENTS EINES SPURWECHSELS FÜR EIN AUTONOMES FAHRZEUG

METHOD AND DEVICE FOR DETERMINING A FEASIBILITY PERCENTAGE OF A LANE CHANGE FOR AN AUTONOMOUS VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.10.2020 FR 2011033**

(43) Date de publication de la demande:
**06.09.2023 Bulletin 2023/36**

(73) Titulaire: **Stellantis Auto SAS 78300 Poissy (FR)**

(72) Inventeurs:
- **VIVET, Luc 75016 PARIS 16 (FR)**
- **MAROUF, Mohamed 78990 Elancourt (FR)**
- **ASTIER, Marie 78960 VOISINS LE BRETONNEUX (FR)**
- **ABOUESSIRE, Ismail Marrakech, 40160 (MA)**

(56) Documents cités:
| | |
| --- | --- |
| EP-A1- 1 607 264 | WO-A1-2006/122867 |
| US-A- 5 521 579 | US-A1- 2018 204 463 |
| US-A1- 2019 382 018 | US-A1- 2020 331 476 |

**Description**

La présente invention revendique la priorité de la demande française 2011033 déposée le 28.10.2020.

L'invention est dans le domaine des systèmes d'aide à la conduite de véhicule autonome. En particulier, l'invention concerne la faisabilité d'une aide à la conduite de type de changement de voie.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Les systèmes d'aide à la conduite de type changement de voie sont connus. Ces systèmes équipent des véhicules et comportent des capteurs aptes détecter l'environnement et des objets adjacents d'un véhicule comportant un de ces systèmes. En particulier, ces systèmes sont aptes à mesurer des positions, des distances inter-véhiculaire, des vitesses et des accélérations des objets adjacents du véhicule. Dans certaines conditions, une trajectoire de changement de voie pour aller vers une voie cible est déterminée. Le conducteur du véhicule en est informé, et si le conducteur manifeste son accord, par exemple en activant le clignotant, ces dits systèmes pilotent alors automatiquement le véhicule pour que le véhicule rejoigne le centre de la voie cible.

Le changement de voie est l'une des manoeuvres les plus dangereuses. Le risque de collision est important. De nombreux données et d'évènements sont à prendre en compte. Pour traiter ces données en temps réel, des dispositifs coûteux sont nécessaires car ils embarquent des processeurs puissants et beaucoup de mémoire. Par ailleurs, les systèmes actuels arrivent mal à anticiper les événements sur tout le temps de la manoeuvre pour changer de voie. Ainsi, les systèmes actuels peuvent initier un changement de voie dès qu'il existe une seule trajectoire possible de l'égo-véhicule.

On connait par les documents US 2018/204463 A1 et EP 1 607 264 A1 des méthodes de changement de voie sécurisées.

Un objet de la présente invention est de remédier au problème précité, en particulier un pourcentage de faisabilité de changement de manoeuvre simple, nécessitant peu de ressources de calcul, est déterminé. Ce pourcentage prend en compte l'ensemble des trajectoires qui respectent un temps inter-véhiculaire prédéterminé.

A cet effet, un premier aspect de l'invention concerne un procédé de détermination d'un pourcentage de faisabilité de changement de voie pour un véhicule autonome, dit égo-véhicule, circulant sur une égo-voie. Ledit procédé comporte les étapes de :

- Acquisition d'un temps inter-véhiculaire cible, TivC, représentant une durée cible séparant le passage de l'avant ou de l'arrière de deux véhicules successifs sur une même voie de circulation ;
- Acquisition d'une voie cible, attenante à l'égo-voie ;
- Acquisition d'un temps de destination, Td, représentant la durée pour que l'égo-véhicule atteigne le centre de la voie cible lors d'un changement de voie ;
- Acquisition de caractéristiques de la dynamique longitudinale de l'égo-véhicule ;
- Acquisition de caractéristiques de la dynamique longitudinale des objets adjacents à l'égo-véhicule, les objets étant sur l'égo-voie et, tant que l'égo-véhicule n'a pas quitté l'égo-voie, sur l'égo-voie ;
- Pour chaque objet, détermination de la trajectoire limite de l'égo-véhicule configurée pour que le temps inter-véhiculaire entre l'égo-véhicule et l'objet soit égale au temps inter-véhiculaire cible à l'instant du temps de destination ;
- Détermination du pourcentage de faisabilité à partir de l'ensemble des trajectoires limites et un ensemble de trajectoires possibles pour l'égo véhicule, l'ensemble des trajectoires possibles pour l'égo-véhicule étant déterminé à partir des caractéristiques de la dynamique longitudinale de l'égo-véhicule.

Le changement de voie est une des manoeuvres les plus dangereuses. L'invention prend en compte l'ensemble de la manoeuvre avec anticipation sur toute la durée de la manoeuvre : prise en compte des objets adjacents de l'égo-véhicule (véhicules, motos, camions, obstacles, cyclistes, piétons, ...), ainsi que de leurs emplacements futurs déduits à partir de leurs caractéristiques dynamiques longitudinales et du temps de destination.

Le pourcentage de faisabilité est très facile à calculer et prend peu de ressources en terme de calculs (processeur, mémoire).

La détermination du pourcentage de faisabilité est dynamique. Dans un mode de réalisation, la détermination du pourcentage de faisabilité est calculée périodiquement et non pas seulement au début de la manoeuvre de changement de voie. Ainsi, le temps de destination est mis à jour périodiquement (par exemple Td=5 secondes au début de la manoeuvre, puis au bout de 2 secondes, Td=3 secondes). L'invention prend en compte les évolutions de l'environnement comme, par exemple, un véhicule sur la voie cible précédant l'égo-véhicule freine brusquement de tel sorte qu'il n'y a plus de trajectoire possible pour respecter le temps inter-véhiculaire. Dans ce cas, il n'y a plus de trajectoire limite, l'égo-véhicule doit, par exemple, sortir d'un mode de pilotage automatique et redonner la main au conducteur. Ainsi sont pris en compte aussi bien les objets sur l'égo-voie que les objets sur la voie cible.

Plus le pourcentage est proche de 100%, plus les trajectoires de l'égo-véhicule pour changer de voie tout en respectant le temps inter-véhiculaire avec les véhicules adjacents sont variées. Un pourcentage proche de 0% indique que le nombre de manoeuvres possibles pour changer de voie par l'égo-véhicule est très faible voir unitaire. Le changement de voie devient alors très risqué. Au moindre évènement non prévu (freinage, accélération, changement de la dynamique longitudinale, ..., d'un objet détecté), il n'y plus de marge de manoeuvre (plus de trajectoire alternative) pour que l'égo-véhicule évite une collision. Le conducteur devra alors reprendre la main sur l'assistance de conduite au pilotage automatique et trouver une solution, ou un pilotage d'urgence (freinage d'urgence, ...) est activé engendrant un stress aux passagers de l'égo-véhicule.

Lorsque l'égo-véhicule a franchi l'égo-voie, les objets sur l'égo-voie, ne sont plus pris en compte. Le calcul du pourcentage de faisabilité est encore plus simple. Un résultat de ce calcul reste pertinent pour identifier des événements inattendus sur la voie cible.

Avantageusement, les caractéristiques de la dynamique longitudinale de l'égo-véhicule comprennent une vitesse, une accélération, une vitesse maximale prédéterminée, une vitesse minimale prédéterminée, une accélération maximale prédéterminée, et/ou une accélération minimale prédéterminée.

Ainsi, la détermination des trajectoires possibles de l'égo-véhicule en est simplifiée en utilisant un faible nombre de caractéristiques.

Avantageusement, les caractéristiques de la dynamique longitudinale des objets comprennent une distance par rapport à l'égo-véhicule, une vitesse, et/ou une accélération.

Ainsi, la détermination des trajectoires limites de l'égo-véhicule en est simplifiée en utilisant un faible nombre de caractéristiques.

Avantageusement, la détermination de la trajectoire limite est :

- Si l'objet précède l'égo-véhicule, la vitesse maximum de l'égo-véhicule à l'instant Td telle que le temps inter-véhiculaire avec ledit objet est égale au temps inter-véhiculaire cible au temps de destination Td ;
- Si l'objet suit l'égo-véhicule, la vitesse minimum de l'égo-véhicule à telle que l'instant Td le temps inter-véhiculaire avec ledit objet est égale au temps inter-véhiculaire cible au temps de destination.la trajectoire limite est :
  Ainsi, les objets précédant l'égo-véhicule et les objets suivant l'égo-véhicule sont pris en compte. Un ensemble de vitesses minimum et de vitesse maximum tout en respectant la contrainte du respect du temps inter-véhiculaire cible est simplement déterminé pour l'égo-véhicule. Connaître des bornes minimum et maximum de vitesses d'un véhicule détermine un semble de trajectoire dudit véhicule.

Avantageusement, la détermination du pourcentage de faisabilité, pf, est donnée par l'équation

$$pf = \max\left(0, \frac{V_{max} - V_{min}}{MaxDeltaV}\right)$$, où Vmax est la plus petite des vitesses de l'égo-véhicule entre la vitesse maximale prédéterminée et les vitesses maximums obtenues, Vmin est la plus grande des vitesses de l'égo-véhicule entre la vitesse minimale prédéterminée et les vitesses minimales obtenues, et MaxDeltaV est l'écart entre la plus grande vitesse possible de l'égo-véhicule et la plus petite vitesse possible de l'égo-véhicule.

Ainsi, le pourcentage est le rapport entre l'étendue des vitesses limites et l'étendue des vitesses possibles pendant toute la durée de la manoeuvre, le temps Td. Dans un mode opératoire, la vitesse maximale possible, respectivement la vitesse minimale possible, est la vitesse maximale, respectivement la vitesse minimale, de l'égo-véhicule au temps de destination Td calculée à partir de la vitesse de l'égo-véhicule acquise, de l'accélération maximale prédéterminée, respectivement accélération minimale prédéterminée, et d'une durée de manoeuvre, le temps Td.

Avantageusement, le procédé comporte en outre une étape de détermination d'un indicateur fondée sur le pourcentage de faisabilité, ledit indicateur pilote un système d'aide à la conduite.

Par exemple, l'indicateur est une valeur booléenne qui vaut 0 si le pourcentage est inférieur à un seuil prédéterminé, et 1 sinon. Dans un mode opératoire, l'indicateur représente un risque de changement de voie.

Dans un autre mode opératoire, il contribue à une analyse de l'environnement adjacent de l'égo-véhicule. Il déclenche une aide à la conduite, comme par exemple le changement de voie.

Un deuxième aspect de l'invention concerne un dispositif comprenant une mémoire associée à au moins un processeur configuré pour mettre en oeuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :

[Fig. 1] illustre schématiquement un dispositif, selon un exemple particulier de réalisation de la présente invention.
[Fig. 2] illustre schématiquement un procédé de détermination d'un pourcentage de faisabilité de changement de voie pour un véhicule autonome, dit égo-véhicule, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

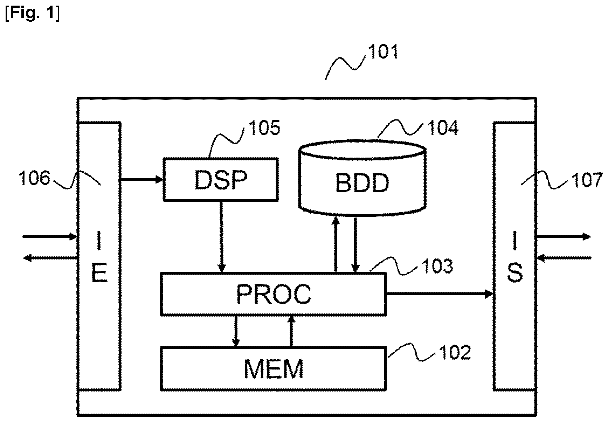

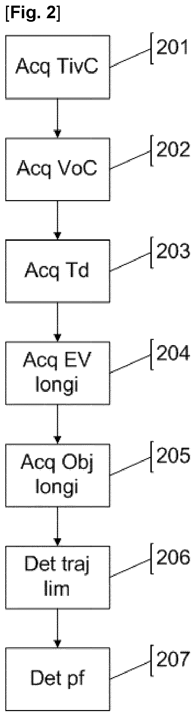

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en oeuvre par un processeur 103 d'au moins une étape du procédé tel que décrit ci-avant. Le dispositif comporte aussi une mémoire de masse 104 pour le stockage de données destinées à être conservées après la mise en oeuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en oeuvre par le procédé selon l'invention et une interface de sortie 107 pour la transmission des données mises en oeuvre par le procédé selon l'invention.

La figure 2 illustre schématiquement un procédé de détermination d'un pourcentage de faisabilité de changement de voie pour un véhicule autonome, dit égo-véhicule, selon un exemple particulier de réalisation de la présente invention.

L'étape 201, Acq TicV, est l'acquisition (201) d'un temps inter-véhiculaire cible, TivC, représentant une durée cible séparant le passage de l'avant ou de l'arrière de deux véhicules successifs sur une même voie de circulation. La durée cible est une valeur prédéterminée soit renseignée par un occupant de l'égo-véhicule par l'intermédiaire d'une interface homme-machine, soit pré-renseignée par une valeur recommandée issue de la réglementation, comme par exemple 2 secondes.

L'étape 202, Acq VoC, est l'acquisition d'une voie cible, attenante à l'égo-voie. Par exemple, il s'agit de savoir si la voie cible est une voie attenante à gauche ou à droite de l'égo-voie. Cette connaissance simplifie l'étape 205 décrite ci-après en se restreignant aux voies nécessaire pour effectuer un changement de voie.

L'étape 203, Acq Td, est l'acquisition d'un temps de destination, Td, représentant la durée pour que l'égo-véhicule atteigne le centre de la voie cible lors d'un changement de voie. Cette durée est soit prédéterminée, par exemple à la valeur de 5 secondes (toute autre valeur est possible), soit dépendante caractéristiques de la dynamique longitudinale de l'égo-véhicule, soit dynamique lorsque le procédé est exécuté périodiquement. Si le procédé est exécuté périodiquement, par exemple à la suite d'une détermination d'une voie cible par un système d'aide à la conduite, le temps de destination est mis à jour périodiquement (par exemple Td=5 secondes au début de la manoeuvre, puis au bout de 2 secondes, Td=3 secondes).

L'étape 204, Acq EV longi, est l'acquisition de caractéristiques de la dynamique longitudinale de l'égo-véhicule. Dans un mode de réalisation, les caractéristiques de la dynamique longitudinale de l'égo-véhicule comprennent une vitesse, une accélération, une vitesse maximale prédéterminée, une vitesse minimale prédéterminée, une accélération maximale prédéterminée, et/ou une accélération minimale prédéterminée. Ainsi, des distances, des vitesses, des accélérations, des jerks, des temps ou durées sont calculés et sont représentatifs de limites physiques du véhicule. Dans un mode de réalisation, la vitesse maximale prédéterminée, la vitesse minimale prédéterminée, l'accélération maximale prédéterminée et l'accélération minimale prédéterminée sont représentatives de valeurs de confort et de la réglementation. Par exemple, la vitesse maximale prédéterminée est égale à 130 km/h, la vitesse minimale prédéterminée est égale à 60 km/h, l'accélération maximale prédéterminée est égale à 2 m/s$^2$, et l'accélération minimale prédéterminée est égale à -2 m/s$^2$.

Dans un autre mode opératoire, ces valeurs prédéterminées sont fondées sur la vitesse et/ou l'accélération, et/ou sur un type de route (autoroute, route nationale, route droite, courbure de route, route avec limitation de vitesse, ...).

L'étape 205, Acq Obj Longi, est l'acquisition de caractéristiques de la dynamique longitudinale des objets adjacents à l'égo-véhicule, les objets étant sur la voie cible et, tant que l'égo-véhicule n'a pas quitté l'égo-voie, sur l'égo-voie. Dans un mode de réalisation, les caractéristiques de la dynamique longitudinale des objets adjacents à l'égo-véhicule comprennent une distance par rapport à l'égo-véhicule, une vitesse, et/ou une accélération. Ainsi, simplement, la dynamique longitudinale de chaque objet est caractérisée. Par exemple, un objet est un véhicule, une moto, un camion, un obstacle, un cycliste, un piéton, ...

Dans un mode de réalisation préféré, il y au maximum 4 objets pris en considération : l'objet, OEVP, sur l'égo-voie, précédant immédiatement l'égo-véhicule, l'objet, OEVS, sur l'égo-voie, suivant immédiatement l'égo-véhicule, l'objet, OVCP, sur la voie cible, précédant immédiatement l'égo-véhicule, l'objet, OVCS, sur la voie cible, suivant immédiatement l'égo-véhicule. Ainsi, l'égo-véhicule est entouré par 4 objets, 2 sur l'égo-voie et 2 sur la voie cible.

L'étape 206, Det traj lim, est la détermination, pour chaque objet, de la trajectoire limite de l'égo-véhicule configurée pour que le temps inter-véhiculaire entre l'égo-véhicule et l'objet, également dit objet identifié, soit égale au temps inter-véhiculaire cible à l'instant du temps de destination.

Dans un mode de réalisation, la trajectoire limite est une vitesse limite de l'égo-véhicule par rapport à l'objet.

Dans la description non limitative ci-après, on entend par « initial » l'instant où le procédé est exécuté par le dispositif 101, ou l'instant où est acquise une des caractéristiques de la dynamique longitudinale de l'égo-véhicule ou de l'objet.

Dans un mode de réalisation, pour chaque objet, on calcule premièrement l'accélération constante nécessaire pour avoir un temps inter-véhiculaire au temps de destination égale au temps inter-véhiculaire cible. Cette accélération est obtenue analytiquement à partir des caractéristiques dynamiques longitudinale de l'égo-véhicule et de l'objet, et du temps inter-véhiculaire cible. Par exemple, dans le cas d'un objet précédant l'égo-véhicule, cette accélération est obtenue à partir de l'équation

$$A0 = \frac{A1 * \frac{Td^2}{2} + (V1 - V0) * Td + D1 - TivC * V0}{Td * (TivC + Td/2)}$$

où A0 est l'accélération constante, A1 est l'accélération initiale de l'objet, V0 est la vitesse initiale de l'égo-véhicule, V1 est l'accélération initiale de l'objet, D1 est la distance initiale de l'objet par rapport à l'égo-véhicule, et TivC est le temps inter-véhiculaire cible. L'équation est obtenue à partir de modèles temporelles du 1er ordre sur la vitesse du véhicule cible et de l'égo-véhicule, de modèles temporelles du 2nd ordre sur la distance du véhicule cible et de l'égo-véhicule, et de la contrainte de respecter le temps inter-véhiculaire cible au temps Td. Dans le cas d'un véhicule suiveur, une équation analytique similaire est obtenue.

Deuxièmement, on calcule, dans la cas d'un objet précédant l'égo-véhicule, la vitesse maximum de l'égo-véhicule à l'instant Td telle que le temps inter-véhiculaire avec ledit objet est égal au temps inter-véhiculaire cible au temps de destination Td, et, dans le cas d'un objet suivant l'égo-véhicule, la vitesse minimum de l'égo-véhicule à l'instant Td telle que le temps inter-véhiculaire avec ledit objet est égal au temps inter-véhiculaire cible au temps de destination Td. Par exemple, dans le cas d'un objet précédant l'égo-véhicule, la vitesse maximum est obtenue à partir de l'équation :

$$Vmax = V0 + A0 * Td$$

où Vmax est la vitesse maximum de l'égo-véhicule calculée au temps Td, V0 est la vitesse initiale de l'égo-véhicule, A0 est l'accélération constante calculée ci-dessus et Td est le temps de destination. Une équation du même type est utilisée pour déterminée la vitesse minimum de l'égo-véhicule calculée au temps Td.

Dans ce mode opératoire, quatre accélérations constantes sont obtenues, une pour l'objet OVCP, une pour l'objet OEVP, une pour l'objet OVCS et une pour l'objet OEVS. Deux vitesses maximums sont obtenues, une pour l'objet OVCP et une pour l'objet OEVP. Deux vitesses minimums sont obtenues : une pour l'objet OVCS et une pour l'objet OEVS. En cas d'absence d'un objet précédant l'égo-véhicule, l'accélération constante est par exemple égale à l'accélération maximale prédéterminée. En cas d'absence d'un objet suivant l'égo-véhicule, l'accélération constante est par exemple égale à l'accélération minimale prédéterminée.

L'étape 207, Det pf, est la détermination du pourcentage de faisabilité à partir de l'ensemble des trajectoires limites et un ensemble de trajectoires possibles pour l'égo véhicule, l'ensemble des trajectoires possibles pour l'égo-véhicule étant déterminée à partir des caractéristiques de la dynamique longitudinale de l'égo-véhicule.

Dans un mode de réalisation, une vitesse maximum et une vitesse minimum de l'égo-véhicule sont déterminées. La vitesse maximum, Vmax, est la plus petite des vitesses de l'égo-véhicule entre la vitesse maximale prédéterminée, VmaxC, et les vitesses maximums obtenues dans l'étape 206. Ainsi, le temps inter-véhiculaire est respecté par rapport aux objets précédant l'égo-véhicule. La vitesse minimum, Vmin, est la plus grande des vitesses de l'égo-véhicule entre la vitesse minimale prédéterminée, VminC, et les vitesses minimums obtenues dans l'étape 206. Ainsi, le temps inter-véhiculaire est respecté par rapport aux objets précédant l'égo-véhicule. L'ensemble des trajectoires limites est donnée par l'écart entre la vitesse maximum, Vmax, et la vitesse minimum, Vmin.

Dans ce mode de réalisation, l'ensemble des trajectoires possible est donné par l'écart MaxDeltaV entre la vitesse maximale possible et la vitesse minimale possible. La vitesse maximale possible, Vmaxp, est la vitesse maximum que peut avoir l'égo-véhicule à l'instant de destination Td. Par exemple, la vitesse maximale possible est donnée par l'équation : *Vmaxp = min(VmaxC, VO + AmaxC * Td)* où V0 est la vitesse intiale, et AmaxC est l'accélération maximale prédéterminée. La vitesse minimale possible, Vminp, est la vitesse minimale que peut avoir l'égo-véhicule à l'instant de destination Td. Par exemple, la vitesse minimale possible est donnée par l'équation : *Vminp = max(VminC, VO + AminC * Td*) où AminC est l'accélération minimale prédéterminée.

Le pourcentage de faisabilité est alors déterminé selon l'équation *pf* = $\max\left(0, \frac{V_{max}-V_{min}}{MaxDeltaV}\right)$ . C'est un nombre compris entre 0 et 1 (0% et 100%). Un nombre proche de 0 indique que très peu de vitesses sont possibles pour l'égo-véhicule afin de pouvoir effectuer un changement de voie dans un temps de destination Td. Inversement, un nombre proche de 1 indique que quasiment toutes les vitesses sont possibles pour l'égo-véhicule afin de pouvoir effectuer un changement de voie dans un temps de destination Td.

Dans un autre mode de réalisation, le procédé comporte en outre une étape de détermination d'un indicateur fondée sur le pourcentage de faisabilité. Par exemple, l'indicateur est une valeur booléenne qui vaut 0 si le pourcentage est inférieur à un seuil prédéterminé, et 1 sinon. Autre exemple, un signal comportant l'indicateur, ou le pourcentage, est transmis à une fonction d'aide à la conduite comme par exemple à une aide au changement de voie semi-automatisée. Selon la valeur, cette fonction va déclencher une action (démarrage, arrêt d'une sous fonction).

Ainsi, on a décrit ci-avant un exemple de réalisation dans lequel il n'y a qu'une seule voie cible attenante à l'égo-voie. Dans un autre mode de réalisation, toutes les voies attenantes à l'égo-voie sont prises en compte. Le pourcentage de faisabilité détermine ainsi aussi un indicateur de densité de circulation qui pilote un système d'aide à la conduite. Dans un autre mode de réalisation, le procédé est exécuté une fois pour une voie cible à gauche de l'égo-voie, et une fois pour une voie cible à droite de l'égo-voie.

## Revendications

1. Procédé de détermination d'un pourcentage de faisabilité de changement de voie pour un véhicule autonome, dit égo-véhicule, circulant sur une égo-voie, ledit procédé comportant les étapes de :

   - Acquisition (201) d'un temps inter-véhiculaire cible, TivC, représentant une durée cible séparant le passage de l'avant ou de l'arrière de deux véhicules successifs sur une même voie de circulation ;
   - Acquisition (202) d'une voie cible, attenante à l'égo-voie ;
   - Acquisition (203) d'un temps de destination, Td, représentant la durée pour que l'égo-véhicule atteigne le centre de la voie cible lors d'un changement de voie ;
   - Acquisition (204) de caractéristiques de la dynamique longitudinale de l'égo-véhicule ;
   - Acquisition (205) de caractéristiques de la dynamique longitudinale des objets adjacents à l'égo-véhicule, les objets étant sur la voie cible et, tant que l'égo-véhicule n'a pas quitté l'égo-voie, sur l'égo-voie ;

   caractérisé à ce que le procédé comporte en outre les étapes de :

   - Pour chaque objet, détermination (206) de la trajectoire limite de l'égo-véhicule configurée pour que le temps inter-véhiculaire entre l'égo-véhicule et l'objet soit égale au temps inter-véhiculaire cible à l'instant du temps de destination ;
   - Détermination (207) du pourcentage de faisabilité à partir de l'ensemble des trajectoires limites et un ensemble de trajectoires possibles pour l'égo véhicule, l'ensemble des trajectoires possibles pour l'égo-véhicule étant déterminé à partir des caractéristiques de la dynamique longitudinale de l'égo-véhicule.

2. Procédé selon la revendication 1, dans lequel les caractéristiques de la dynamique longitudinale de l'égo-véhicule comprennent une vitesse, une accélération, une vitesse maximale prédéterminée, une vitesse minimale prédéterminée, une accélération maximale prédéterminée, et/ou une accélération minimale prédéterminée.

3. Procédé selon l'une des revendications précédentes, dans lequel les caractéristiques de la dynamique longitudinale des objets comprennent une distance par rapport à l'égo-véhicule, une vitesse, et/ou une accélération.

4. Procédé selon l'une des revendications précédentes, dans lequel la détermination de la trajectoire limite est :

- Si l'objet précède l'égo-véhicule, la vitesse maximum de l'égo-véhicule à l'instant Td telle que le temps inter-véhiculaire avec ledit objet est égal au temps inter-véhiculaire cible au temps de destination Td ;
- Si l'objet suit l'égo-véhicule, la vitesse minimum de l'égo-véhicule à l'instant Td telle que le temps inter-véhiculaire avec ledit objet est égal au temps inter-véhiculaire cible au temps de destination.

**5.** Procédé selon la revendication 4, dans lequel la détermination du pourcentage de faisabilité, pf, est donnée par l'équation $pf = \max\left(0, \frac{V_{max} - V_{min}}{MaxDeltaV}\right)$ où Vmax est la plus petite des vitesses de l'égo-véhicule entre la vitesse maximale prédéterminée et les vitesses maximums obtenues, Vmin est la plus grande des vitesses de l'égo-véhicule entre la vitesse minimale prédéterminée et les vitesses minimales obtenues, et MaxDeltaV est l'écart entre la plus grande vitesse possible de l'égo-véhicule et la plus petite vitesse possible de l'égo-véhicule.

**6.** Procédé selon l'une des revendications précédentes, dans lequel le procédé comporte en outre une étape de détermination d'un indicateur fondée sur le pourcentage de faisabilité, ledit indicateur pilote un système d'aide à la conduite.

**7.** Dispositif (101) comprenant une mémoire (102) associée à au moins un processeur (103) configuré pour mettre en oeuvre le procédé selon l'une des revendications précédentes.

**8.** Véhicule comportant le dispositif selon la revendication 7.

**9.** Programme d'ordinateur comprenant des instructions adaptées pour l'exécution des étapes du procédé selon l'une des revendications 1 à 6 lorsque ledit programme est exécuté par au moins un processeur (103).

**Patentansprüche**

**1.** Verfahren zur Bestimmung eines Durchführbarkeitsprozentsatzes für einen Spurwechsel für ein autonomes Fahrzeug, ein sogenanntes Ego-Fahrzeug, das auf einer Ego-Spur fährt, wobei das Verfahren die folgenden Schritte umfasst:

- Erfassung (201) einer Zielzeit zwischen Fahrzeugen, TivC , die eine Zieldauer darstellt, die die Durchfahrt von vorne oder hinten von zwei aufeinanderfolgenden Fahrzeugen auf derselben Spur trennt;
- Erfassung (202) eines Zielkanals, angrenzend an den Ego-Kanal;
- Erfassung (203) einer Zielzeit Td, die die Dauer darstellt, die das Ego-Fahrzeug benötigt, um beim Spurwechsel die Mitte der Zielspur zu erreichen;
- Erfassung (204) von Merkmalen der Längsdynamik des Ego-Fahrzeugs;
- Erfassung (205) von Merkmalen der Längsdynamik der dem Ego-Fahrzeug benachbarten Objekte, wobei sich die Objekte auf der Zielspur und, solange das Ego-Fahrzeug die Ego-Spur nicht verlassen hat, auf dem Ego-Weg befinden;

gekennzeichnet, dass das Verfahren weiterhin die Schritte umfasst:

- Bestimmen (206) der Grenztrajektorie des Ego-Fahrzeugs für jedes Objekt, die so konfiguriert ist, dass die Fahrzeugzeit zwischen dem Ego-Fahrzeug und dem Objekt gleich der Soll-Fahrzeugzeit zum Zeitpunkt des Zielzeitpunkts ist;
- Bestimmung (207) des Machbarkeitsprozentsatzes aus der Menge der Grenztrajektorien und einer Menge möglicher Trajektorien für das Ego-Fahrzeug, wobei die Menge möglicher Trajektorien für das Ego-Fahrzeug aus den Eigenschaften der Längsdynamik des Ego-Fahrzeugs bestimmt wird. Fahrzeug.

**2.** Verfahren nach Anspruch 1, wobei die Merkmale der Längsdynamik des Ego-Fahrzeugs eine Geschwindigkeit, eine Beschleunigung, eine vorgegebene Maximalgeschwindigkeit, eine vorgegebene Minimalgeschwindigkeit, eine vorgegebene Maximalbeschleunigung e und/oder eine vorgegebene Minimalbeschleunigung umfassen.

**3.** Verfahren nach einem der vorhergehenden Ansprüche, bei dem die Merkmale der Längsdynamik der Objekte einen Abstand relativ zum Ego-Fahrzeug, eine Geschwindigkeit und/oder eine Beschleunigung umfassen.

**4.** Verfahren nach einem der vorhergehenden Ansprüche, bei dem die Bestimmung der Grenztrajektorie erfolgt:

- Wenn das Objekt dem Ego-Fahrzeug vorausgeht, ist die Höchstgeschwindigkeit des Ego-Fahrzeugs zum Zeitpunkt Td so, dass die Fahrzeugzwischenzeit mit dem Objekt gleich der Soll-Fahrzeugzwischenzeit zum Zielzeitpunkt Td ist;
- Wenn das Objekt dem Ego-Fahrzeug folgt, ist die Mindestgeschwindigkeit des Ego-Fahrzeugs zum Zeitpunkt Td so, dass die Zwischenfahrzeugzeit mit dem Objekt gleich der Soll-Zwischenfahrzeugzeit zum Zielzeitpunkt ist.

**5.** Verfahren nach Anspruch 4, bei dem die Bestimmung des Machbarkeitsprozentsatzes pf durch die Gleichung gegeben ist, $pf = \max\left(0, \frac{V_{max} - V_{min}}{MaxDeltaV}\right)$ wobei Vmax die kleinste der Geschwindigkeiten des Ego-Fahrzeugs zwischen der vorgegebenen Höchstgeschwindigkeit und den erhaltenen Höchstgeschwindigkeiten ist, Vmin die größte Geschwindigkeit des Ego-Fahrzeugs zwischen der vorgegebenen Mindestgeschwindigkeit und den ermittelten Mindestgeschwindigkeiten und MaxDeltaV ist die Differenz zwischen der höchstmöglichen Geschwindigkeit des Ego-Fahrzeugs und der kleinstmöglichen Geschwindigkeit des Ego-Fahrzeugs.

**6.** Verfahren nach einem der vorangehenden Ansprüche, wobei das Verfahren weiterhin einen Schritt des Bestimmens eines Indikators basierend auf dem Prozentsatz der Machbarkeit umfasst, wobei der Indikator ein Fahrassistenzsystem steuert.

**7.** Vorrichtung (101), umfassend einen Speicher (102), der mindestens einem Prozessor (103) zugeordnet ist, der zur Durchführung des Verfahrens nach einem der vorhergehenden Ansprüche konfiguriert ist.

**8.** Fahrzeug umfassend die Vorrichtung nach Anspruch 7.

**9.** Computerprogramm mit Anweisungen, die für die Ausführung der Schritte des Verfahrens nach einem der Ansprüche 1 bis 6 geeignet sind, wenn das Programm von mindestens einem Prozessor (103) ausgeführt wird.

**Claims**

**1.** Method for determining a lane change feasibility percentage for an autonomous vehicle, called an ego-vehicle, traveling on an ego-lane, said method comprising the steps of:

- Acquisition (201) of a target inter-vehicular time, TivC , representing a target duration separating the passage from the front or the rear of two successive vehicles on the same lane;
- Acquisition (202) of a target channel, adjacent to the ego-channel;
- Acquisition (203) of a destination time, Td, representing the duration for the ego-vehicle to reach the center of the target lane when changing lanes;
- Acquisition (204) of characteristics of the longitudinal dynamics of the ego-vehicle;
- Acquisition (205) of characteristics of the longitudinal dynamics of the objects adjacent to the ego-vehicle, the objects being on the target lane and, as long as the ego-vehicle has not left the ego-lane, on the ego-way;

**characterized in that** the method further comprises the steps of:

- For each object, determining (206) the limit trajectory of the ego-vehicle configured so that the inter-vehicular time between the ego-vehicle and the object is equal to the target inter-vehicular time at the instant of time destination;
- Determination (207) of the percentage of feasibility from the set of limit trajectories and a set of possible trajectories for the ego-vehicle, the set of possible trajectories for the ego-vehicle being determined from the characteristics of the dynamics longitudinal of the ego-vehicle.

**2.** Method according to claim 1, wherein the characteristics of the longitudinal dynamics of the ego-vehicle include a speed, an acceleration, a predetermined maximum speed, a predetermined minimum speed, a predetermined maximum acceleration e, and/or a predetermined minimum acceleration .

**3.** Method according to one of the preceding claims, in which the characteristics of the longitudinal dynamics of the objects include a distance relative to the ego-vehicle, a speed, and/or an acceleration.

4.  Method according to one of the preceding claims, in which the determination of the limit trajectory is:

    - If the object precedes the ego-vehicle, the maximum speed of the ego-vehicle at time Td such that the inter-vehicular time with said object is equal to the target inter-vehicular time at the destination time Td;
    - If the object follows the ego-vehicle, the minimum speed of the ego-vehicle at time Td such that the inter-vehicular time with said object is equal to the target inter-vehicular time at the destination time.

5.  Method according to claim 4, in which the determination of the percentage of feasibility, pf, is given by the equation

    $$pf = \max\left(0, \frac{V_{max} - V_{min}}{MaxDeltaV}\right)$$ where Vmax is the smallest of the speeds of the ego-vehicle between the predetermined maximum speed and the maximum speeds obtained, Vmin is the greatest speed of the ego-vehicle between the predetermined minimum speed and the minimum speeds obtained, and MaxDeltaV is the difference between the highest possible speed of the ego-vehicle and the smallest possible speed of the ego-vehicle.

6.  Method according to one of the preceding claims, in which the method further comprises a step of determining an indicator based on the percentage of feasibility, said indicator controls a driving assistance system.

7.  Device (101) comprising a memory (102) associated with at least one processor (103) configured to implement the method according to one of the preceding claims.

8.  Vehicle comprising the device according to claim 7.

9.  Computer program comprising instructions adapted for the execution of the steps of the method according to one of claims 1 to 6 when said program is executed by at least one processor (103).

[**Fig. 1**]

[Fig. 2]

```
        ┌──────────────┐
        │   Acq TivC   │──────── 201
        └──────┬───────┘
               │
               ▼
        ┌──────────────┐
        │   Acq VoC    │──────── 202
        └──────┬───────┘
               │
               ▼
        ┌──────────────┐
        │   Acq Td     │──────── 203
        └──────┬───────┘
               │
               ▼
        ┌──────────────┐
        │   Acq EV     │──────── 204
        │   longi      │
        └──────┬───────┘
               │
               ▼
        ┌──────────────┐
        │   Acq Obj    │──────── 205
        │   longi      │
        └──────┬───────┘
               │
               ▼
        ┌──────────────┐
        │   Det traj   │──────── 206
        │   lim        │
        └──────┬───────┘
               │
               ▼
        ┌──────────────┐
        │   Det pf     │──────── 207
        └──────────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2011033
- US 2018204463 A1
- EP 1607264 A1